# EUROPÄISCHE PATENTANMELDUNG

(11) **EP 2 568 449 A1**
(43) Veröffentlichungstag der Anmeldung: **13.03.2013**
(21) Anmeldenummer: 12176809.7
(22) Anmeldetag: 18.07.2012
(51) Int. Cl.: G07F 11/00, G07F 13/10, G07F 13/06, A47J 31/36, G07F 11/44, G07F 11/26

(54) **Automat zur Ausgabe von Lebensmitteln**

(30) Priorität: 08.09.2011 DE 202011105479 U
(71) Anmelder: SIELAFF GMBH & CO. KG AUTOMATENBAU, 91567 Herrieden (DE)
(72) Erfinder: Bayer, Josef, 91567 Herrieden (DE)
(74) Vertreter: Isarpatent

(57) **Zusammenfassung**

Die Erfindung betrifft einen Automat zur Ausgabe von Lebensmitteln, insbesondere Verkaufsautomat zur Ausgabe von Heiß- und Kaltgetränken, mit zumindest einem Vorratsbehälter zur Aufnahme von losen Zusatzprodukten, mit einer Warenausgabevorrichtung, die eine erste Ausgabevorrichtung zur bedarfsweisen Ausgabe eines angeforderten Lebensmittels in einem ersten Ausgabebereich und eine zweite Ausgabevorrichtung zur bedarfsweisen Ausgabe zumindest eines dem angeforderten Lebensmittel zugeordneten Zusatzproduktes in einem zweiten Ausgabebereich, welche eine Fördereinrichtung aufweist, die zwischen dem Vorratsbehälter und dem zweiten Ausgabebereich angeordnet ist und die dazu ausgebildet ist, aus dem Vorratsbehälter lose bereitgestellte Zusatzprodukte einzeln aufzunehmen und das oder die aufgenommenen Zusatzprodukte zum zweiten Ausgabebereich zu transportieren, enthält.

## Beschreibung

Die vorliegende Erfindung betrifft einen Automaten zur Ausgabe von Lebensmitteln, insbesondere einen Verkaufsautomaten zur Ausgabe von Heiß- und Kaltgetränken.

### TECHNISCHER HINTERGRUND

Die vorliegende Erfindung befindet sich im Umfeld von Selbstbedienungsautomaten und insbesondere von als Verkaufsautomaten ausgebildeten Selbstbedienungsautomaten. Ein Selbstbedienungsautomat ist ein Apparat, welcher Waren zumeist gegen Bezahlung (Verkaufsautomat) ausgibt. Eine Sonderform eines Selbstbedienungsautomaten ist ein Getränkeautomat, welcher meistens für den Verkauf von Kalt- oder Heißgetränken, aber auch für andere flüssige Lebensmittel ausgelegt ist. Getränkeautomaten liefern das Getränk in offener Form in einem Becher, als Flaschen, Dosen oder dergleichen. Die vorliegende Erfindung sowie die ihr zugrunde liegende Problematik werden nachfolgend mit Bezug auf ein als Heißgetränkeautomat ausgebildeten Verkaufsautomaten erläutert, ohne jedoch die Erfindung dahingehend einzuschränken.

Bei modernen Heißgetränkeautomaten kann ein Benutzer ein spezielles Heißgetränk, wie etwa Kaffee, Espresso, Cappuccino, Latte Macchiato, Café Creme, diverse Tees, etc. auswählen. Der Heißgetränkeautomat gibt nach der Produktauswahl zunächst ein Becher aus, in welchen anschließend das entsprechende Heißgetränk gefüllt wird. Zusätzliche verfügen moderne Heißgetränkeautomaten über Auswahlmöglichkeiten, mittels welchen der Benutzer beispielsweise die Milchmenge und die Zuckermenge dosieren kann. Die Milch bzw. der Zucker werden dann bei der Ausgabe dem Heißgetränk beigemischt.

Das Zumischen des Zuckers kann über eine eigens im Heißgetränkeautomaten angebrachte Dosiereinrichtung erfolgen, wodurch der Zucker dem Heißgetränk entweder über einen Mixer zugeführt wird oder während der Getränkeausgabe in den Becher ausgegeben werden. Eine Ausgabe direkt in den Becher erfolgt beispielsweise dann, wenn Heißgetränke mit geringer Flüssigkeitsmenge, insbesondere Espresso, ausgegeben werden sollen. Problematisch ist aber, dass der Zucker durch Dampfbildung bei der Aufbereitung des Heißgetränks verhärtet und infolgedessen die Ausgabe des Getränks gestört oder zumindest behindert wird. Solche Getränkeautomaten sind daher sehr wartungsintensiv. Zudem empfinden verschiedene Benutzer ein gesüßtes Getränk unterschiedlich, da dies vornehmlich von dem persönlichen Geschmack abhängt. Daher besteht mitunter der Bedarf bei einem Kunden, dem Heißgetränk selbst die entsprechende Menge Milch oder Zucker beizumischen.

In der Deutschen Patentanmeldung DE 20 2004 010 884 A1 sind Zusatzprodukte vorgesehen, welche separate zu dem Heißgetränk ausgegeben werden. Das Heißgetränk wird hier in an sich bekannter Weise entsprechend der Auswahl des Benutzers zubereitet. Zusatzprodukte, wie beispielsweise Milch, Zucker oder dergleichen, werden hier in Kapselform über ein separates Ausgabefach ausgegeben, sodass der Benutzer diese dann selbst dem Heißgetränk hinzufügen kann. Auf diese Weise wird eine Störung der Ausgabe des Heißgetränks vermieden. Zudem kann der Benutzer die Zugabe des Zusatzstoffes selbst dosieren. Diese Zusatzprodukte werden in einem eigens dafür vorgesehenen Behälter in dem Heißgetränkeautomat gelagert.

Die kapselförmigen Zusatzprodukte werden über eine Ausgabeeinheit ausgegeben. Bei der Ausgabe der Zusatzprodukte fallen diese mehr oder weniger ungeordnet über eine Entladeleitung in ein Aufnahmefach, welches von dem Benutzer zugänglich ist. Problematisch daran ist, dass auf diese Weise ein definiertes, vereinzeltes Ausgeben der Zusatzprodukte nicht immer möglich ist.

Zudem kann es bei einer Verstopfung der Ausgabeeinheit dazu kommen, dass gar keine Zusatzprodukte mehr ausgegeben werden können. Dies ist für Benutzer unangenehm. Darüber hinaus führt dies im Allgemeinen dazu, dass der Verkaufsautomat gewartet werden muss, was zu Zusatzkosten und Ausfällen führt. Darüber hinaus ist es auch möglich, dass statt eines einzelnen Zusatzproduktes versehentlich mehrere Zusatzprodukte gleichzeitig ausgegeben werden, was es allerdings ebenso zu vermeiden gilt, da auch dies mit Zusatzkosten einhergeht.

Ein weiteres Problem bei der DE 20 2004 010 884 A1 besteht darin, dass die Zusatzprodukte bei deren Ausgabe über die Entladeleitung mehr oder weniger im freien Fall in den Ausgabebereich fallen. Im Falle von kapselförmigen Zusatzprodukten, die zur Aufnahme von Flüssigkeiten vorgesehen sind, kann es dadurch zur Beschädigung der Verpackung kommen, was einerseits unangenehm für den Benutzer ist und was andererseits zu einem Verdrecken des Ausgabebereichs führt. Letzteres ist nicht verkaufsfördernd. Darüber hinaus ist dieser Umstand auch für den Benutzer unangenehm, da er sein angefordertes Getränk nun ohne das zugehörige Zusatzprodukt, beispielsweise Zucker oder Milch, genießen muss.

All dies sind Zustände, die es zu vermeiden gilt.

### ZUSAMMENFASSUNG DER ERFINDUNG

Vor diesem Hintergrund liegt der vorliegenden Erfindung die Aufgabe zugrunde, bei einem Automaten zur Ausgabe von Lebensmitteln eine sichere und definierte Ausgabe von mit dem jeweiligen Lebensmittel verknüpften Zusatzprodukten zu ermöglichen.

Erfindungsgemäß wird diese Aufgabe durch einen Automat mit den Merkmalen des Patentanspruchs 1 gelöst.

Demgemäß ist ein Automat zur Ausgabe von Lebensmitteln vorgesehen, insbesondere ein Verkaufsautomat zur Ausgabe von Heiß- und Kaltgetränken, mit zumindest einem Vorratsbehälter zur Aufnahme von losen Zusatzprodukten, mit einer Warenausgabevorrichtung, die enthält: eine erste Ausgabevorrichtung zur bedarfsweisen Ausgabe eines angeforderten Lebensmittels in einem ersten Ausgabebereich, eine zweite Ausgabevorrichtung zur bedarfsweisen Ausgabe zumindest eines dem angeforderten Lebensmittel zugeordneten Zusatzproduktes in einem zweiten Ausgabebereich, welche eine Fördereinrichtung aufweist, die zwischen dem Vorratsbehälter und dem zweiten Ausgabebereich angeordnet ist und die dazu ausgebildet ist, aus dem Vorratsbehälter lose bereitgestellte Zusatzprodukte einzeln aufzunehmen und das oder die aufgenommenen Zusatzprodukte zum zweiten Ausgabebereich zu transportieren.

Die Idee der vorliegenden Erfindung besteht darin, bei einem Verkaufsautomaten eine Fördereinrichtung bereitzustellen, mittels der Zusatzprodukte aus einem Vorratsbehälter entnommen werden und in einen Ausgabebereich befördert werden. Die Ausgabe der so transportierten und ausgegebenen Zusatzprodukte erfolgt bedarfsgemäß, das heißt entsprechend dem Wunsch des Benutzers. Je nach Wunsch können eine verschiedene Anzahl von solchen Zusatzprodukten und/oder verschiedenartige Zusatzprodukte ausgegeben werden. Die Zusatzprodukte sollen einem auszugebenden Lebensmittel zugeordnet sein.

Da der Transport über eine eigens dafür vorgesehene Fördereinrichtung erfolgt, die die angeforderten Zusatzprodukte direkt in den Ausgabebereich transportiert, unterbleibt erfindungsgemäß eine Beschädigung dieser Zusatzprodukte durch einen unsachgemäßen Transport.

Mittels des erfindungsgemäßen Automaten wird ein definiertes Ausgeben der Zusatzprodukte realisiert, insbesondere was deren Art, Anzahl sowie deren Zustand bei der Ausgabe angeht. Dadurch, dass auf diese Weise ein Zerstören bzw. Beschädigen der Zusatzprodukte unterbleibt, unterbleibt auch ein Verdrecken oder Verschmutzen des Ausgabebereichs, in welchen diese Zusatzprodukte transportiert werden. Dies wird von Benutzern des Automaten oder Kunden als angenehm angesehen. Zudem kann ein Reinigen oder Warten des Automaten in größeren Abständen vorgenommen werden, was sich insbesondere im gewerblichen Gebrauch als kostensenkend auswirkt.

Vorteilhafte Ausgestaltungen und Weiterbildungen ergeben sich aus den weiteren Unteransprüchen sowie aus der Beschreibung unter Bezugnahme auf die Figuren der Zeichnung.

In einer bevorzugten Ausgestaltung ist die Fördereinrichtung als Elevator oder als Förderschnecke ausgebildet. Der Elevator besteht beispielsweise aus einem mit Stufen versehenen Förderband. Ein Elevator bezeichnet einen mechanischen Stetigförderer für die Senkrechtförderung (z. B. ein Gurtbecherwerk). Als Stetigförderer bezeichnet man ein System innerhalb der Fördertechnik, das einen kontinuierlichen Transportstrom erzeugt. Die Verwendung eines Elevators hat den Vorteil hat, dass damit gleichzeitig auch die Funktion der Vereinzelung der Zusatzprodukte erfüllt wird. Mögliche weitere Ausgestaltungen der Fördervorrichtung sind Schaufelräder, Förderbänder, Schneckenförderer, Schieber, Rutschen, Greifarme, Förderrollen und dergleichen.

In einer weiteren Ausgestaltung ist eine Rückführeinrichtung vorgesehen ist, welche dazu ausgebildet ist, ein von einem Benutzer nicht entnommenes Zusatzprodukt von dem zweiten Ausgabebereich der Fördereinrichtung und/oder der Vorratsvorrichtung wieder zurückzuführen. Durch dieses Rückführen können die nicht entnommenen Zusatzprodukte den zweiten Ausgabebereich nicht versperren. Außerdem wird verhindert, dass der zweite Ausgabebereich durch nicht entnommene Zusatzprodukte vermüllt. Die rückgeführten Zusatzprodukte können gegebenenfalls z.B. erneut ausgegeben werden, was im Hinblick auf die Kosteneinsparung vorteilhaft ist. Die Rückführeinrichtung kann z.B. durch einen Schieber, ein Förderrad, eine Förderschnecke, ein Förderband, eine Rutsche oder dergleichen, insbesondere in Kombination mit einem Elevator, ausgeführt werden.

In einer weiteren Ausgestaltung ist der Automat als Getränkeautomat ausgebildet. Der Getränkeautomat weist eine Aufbereitungsvorrichtung zum Herstellen und/oder zum Aufbereiten von Getränken auf. Die Getränke können als fertige Produkte im Automat vorliegen oder erst im Automat hergestellt werden. Für die Getränkeherstellung können sowohl Vorprodukte in flüssiger und/oder fester Form miteinander vermischt werden, als auch eine bedarfsgerechte Temperatur des Getränks eingestellt werden.

In einer weiteren Ausgestaltung ist die Aufbereitungsvorrichtung zur Aufbereitung von Heißgetränken, insbesondere von Tee, Kaffee oder Kaffeeprodukten, ausgebildet. Der Kaffee kann frisch aufgebrüht werden, mittels Druck erzeugt werden, aufgewärmt werden oder auch aus einem löslichen Pulver hergestellt werden.

In einer weiteren Ausgestaltung ist der Getränkeautomat als so genanntes Standgerät ausgebildet ist, welches zum Beispiel in einem öffentlichen Bereich selbstständig, d.h. ohne Tisch oder Befestigungsmittel, auf dem Boden aufgestellt wird und von Kunden bedienbar ist. Standgeräte weisen typischerweise eine Größe (Höhe) von mindestens 1,6 Meter, vorzugsweise von 1,8 Meter auf. Des Weiteren ist aber auch eine Ausgestaltung des Automaten als so genanntes Table-Top Gerät denkbar. Solche Table-Top Geräte sind im Vergleich zu den Standgeräten deutlich kleiner, jedoch größer als die bekannten, meist im häuslichen Gebrauch befindlichen Kaffeevollautomaten. Table-Top Geräte sind dazu ausgebildet, auf dem Tisch, Regal, Tresen oder dergleichen platziert zu werden. Table-Top Geräte lassen sich meist in der Gastronomie, bei Bäckern, in einer Kantine oder dergleichen auf einem Tisch platzieren.

In einer weiteren Ausgestaltung sind die erste und die zweite Ausgabevorrichtung derart ausgebildet, dass das Zusatzprodukt gleichzeitig mit dem angeforderten Lebensmittel oder unmittelbar nach der Ausgabe des angeforderten Lebensmittels ausgebbar ist. Somit kann ein Lebensmittel und das entsprechende Zusatzprodukt mit einem einzigen Bedienvorgang ausgegeben werden, was die Bedienerfreundlichkeit erhöht. Die dadurch resultierende Zeitersparnis führt zudem zu einem höheren Durchsatz des Automaten bei der Ausgabe an angeforderten Lebensmitteln.

In einer weiteren Ausgestaltung ist eine Verknüpfungseinrichtung vorgesehen, welche dazu ausgebildet ist, ein Zusatzprodukt mit dem angeforderten Lebensmittel zu verbinden, beispielsweise an dem angeforderten Lebensmittels anzukleben, anzuheften oder in irgendeiner anderen Form anzubringen. Das Anbringen kann an einem oder mehreren Fixierpunkten, z.B. abhängig von der Form und Ausgestaltung der Zusatzprodukte und/oder der Behältnisse des Lebensmittels, erfolgen. Das Anheften kann beispielsweise durch Klammern oder Nieten, das Ankleben durch Anbringen eine Klebestreifens, eines Klebestrips, eines Flüssigklebers oder eines Heißklebers, oder dergleichen ausgeführt werden.

In einer Ausführungsform umfasst ein Zusatzprodukt ein Sachet, ein Portionstütchen, ein Beutel oder ein geschlossenes Röhrchen aus Papier oder Kunststoff. Diese stellen handelsübliche Umfassungen und Verpackungen dar, die nicht eigens für die vorliegende Erfindung präpariert oder umverpackt werden müssen. Auch können diese Art an Zusatzprodukten kostengünstig und in großer Stückzahl bezogen werden. Das Zusatzprodukt kann z.B. ein Lebensmittel und/oder ein gängiger Bedarfsgegenstand enthalten, welche zum Beispiel üblicherweise mit dem angeforderten Lebensmittel, beispielsweise dem Kaffeeprodukt, verwendet wird.

In einer Ausführung umfasst ein Bedarfsgegenstand Verpackungen aus Papier oder Kunststoff, Umrührstäbchen, insbesondere aus Kunststoff oder Holz, Besteck, insbesondere aus Kunststoff, Zahnstocher, Servietten, Spielwaren und/oder Scherzartikel. Denkbar wären natürlich auch andere Bedarfsgegenstände, die in Zusammenhang mit dem angeforderten Lebensmittel gebracht werden können.

In einer Ausführung umfasst das Lebensmittel Zucker (in loser Form oder als Zuckerstücke), Süßstoff (flüssig, in Pulverform oder als Tabletten), Milch, Milchpulver, Zitronensaft oder -extrakt, Sirup, Spirituosen, Kakaopulver, Salz, Gewürze, Salz, Pfeffer, getrocknete Kräuter, Streusel, geriebenen Käse, Brotwürfel, Instantprodukte und/oder Aromastoffe.

In einer bevorzugten Ausgestaltung ist eine Steuereinrichtung zur Steuerung der Warenausgabevorrichtung vorgesehen, die die Warenausgabevorrichtung derart ansteuert, dass bedarfsgemäß ein dem angeforderten Lebensmittel jeweils zugeordnetes Zusatzprodukt und/oder eine dem angeforderten Lebensmittel zugeordnete Anzahl an Zusatzprodukten ausgebbar ist.

In einer weiteren Ausgestaltung ist eine Umverpackungseinrichtung vorgesehen, die dazu ausgebildet ist, lose bereitgestellte Zusatzprodukte zu verpacken und über die zweite Ausgabeeinrichtung in der Verpackung auszugeben. Damit können handelsübliche, insbesondere mit Papier oder Kunststoff umfasste Zusatzprodukte vor der Ausgabe eine zusätzliche Funktionsverpackung oder eine Verpackung zur Werbung, Aufwertung (zum Beispiel eine wasserdichte Verpackung) oder Kennzeichnung der Zusatzprodukte erhalten.

In einer weiteren Ausgestaltung ist eine Freigabeeinrichtung in Kombination mit einer Steuereinrichtung vorgesehen, Über die Steuereinrichtung lässt sich die Freigabeeinrichtung bedarfsgemäß für die Ausgabe zumindest eines vorbestimmten Zusatzproduktes freigeben.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnungen angegebenen Ausführungsbeispiele näher erläutert. Es zeigen dabei:
- Fig. 1: den Aufbau eines erfindungsgemäßen Automaten;
- Fig. 2: die Ausgestaltung des erfindungsgemäßen Automaten als Standgerät;
- Fig. 3: eine Anordnung zur Lagerung, Transport, Verpackung und Ausgabe von Zusatzprodukten;
- Fig. 4: eine weitere Anordnung zur Lagerung, Transport, Verknüpfung, Ausgabe und Rückführung von Zusatzprodukten;
- Fig. 5A-5C: verschiedene Lebensmittel und Bedarfsgegenstände für einen erfindungsgemäßen Automaten.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausführt ist - jeweils mit denselben Bezugszeichen versehen.

### BESCHREIBUNG VON AUSFÜHRUNGSBEISPIELEN

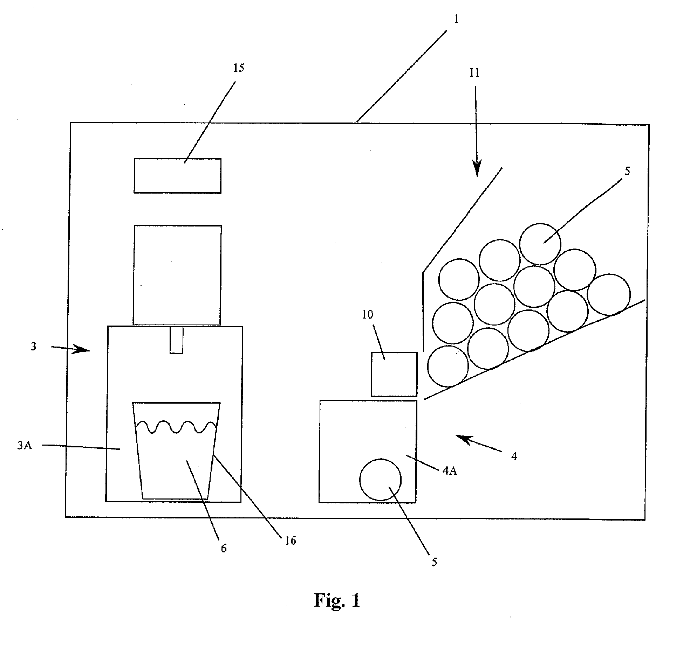

Figur 1 zeigt den Aufbau eines erfindungsgemäßen Automaten zur Ausgabe von Lebensmitteln. Der Automat, der hier mit Bezugszeichen 1 bezeichnet ist, sei zum Beispiel als Getränkeautomat 1 ausgebildet. Der Getränkeautomat 1 umfasst ein hier nicht dargestelltes Gehäuse, in dem eine erste Ausgabevorrichtung 3, eine zweite Ausgabevorrichtung 4, eine Vorratseinrichtung 11 und eine Bedieneinrichtung 15 vorgesehen sind.

Die erste Ausgabevorrichtung 3 dient dem Zweck, ein zum Beispiel von einem Benutzer über die Bedieneinrichtung 15 angefordertes Getränk 6 in einem ersten Ausgabebereich 3A auszugeben. Im gezeigten Beispiel ist in dem ersten Ausgabebereich 3A ein Becher 16 angeordnet, in welchen das Getränk 6 gefüllt wird.

In der Vorratseinrichtung 11 sind die verschiedenen Zusatzprodukte 5, die mit dem angeforderten und ausgegebenen Getränk 6 verwendet werden können, in einzelner Form vorgesehen. Das bedeutet, dass diese Zusatzprodukte 5 beispielsweise in einer geeigneten Verpackung als Kapseln, Sachets oder dergleichen vorgesehen sind.

Die zweite Ausgabeeinrichtung 4 umfasst im gezeigten Ausführungsbeispiel einen zweiten Ausgabebereich 4A sowie eine hier nur schematisch und stark vereinfach dargestellte Fördereinrichtung 10. Mittels dieser Fördereinrichtung 10 können die Zusatzprodukte 5 aus dem Vorratsbehälter 11 einzeln in den Ausgabebereich 4a transportiert werden.

Im gezeigten Beispiel sind die beiden Ausgabebereiche 3A, 4A der ersten und zweiten Ausgabevorrichtung 3, 4 getrennt voneinander vorgesehen. Es wäre allerdings auch denkbar, dass lediglich ein einziger Ausgabebereich 3A, 4A vorgesehen ist, der zur Ausgabe sowohl des angeforderten Lebensmittels 6 als auch des damit verknüpften Zusatzproduktes 5 vorgesehen ist. Dies ist in der Figur 1 nicht dargestellt.

Die Bedieneinrichtung 15 kann zum Beispiel eine Taste, eine Tastatur, ein Touchpad oder dergleichen sein. Über die Bedieneinrichtung 15 kann ein Benutzer einen Kundenwunsch eingeben. Beispielsweise kann er über die Bedieneinrichtung 15 angeben, welches Getränk 6 er wünscht und gegebenenfalls welche Zusatzprodukte 5 zusammen mit diesem Getränk 6 ausgegeben werden sollen. Vorteilhafter Weise gibt der Benutzer allerdings lediglich an, welches Getränk 6 er wünscht. Mittels einer im Automaten 1 vorgesehenen, hier nicht dargestellten Steuereinrichtung wird diesem Getränk 6 automatisch ein jeweiliges Zusatzprodukt zugeordnet. Das Getränk 6 und das entsprechende Zusatzprodukt 5 werden dann über die Ausgabeeinrichtungen 3, 4 ausgegeben.

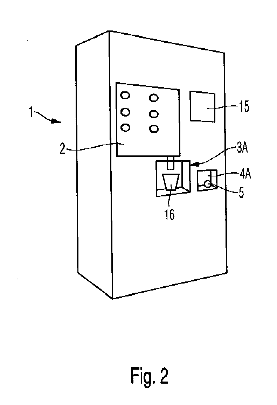

Figur 2 zeigt die Ausbildung des erfindungsgemäßen Automaten als Standgerät. Der Getränkeautomat 1 weist eine Getränkeaufbereitungsvorrichtung 2 zur Ausgabe eines Getränks über die erste Ausgabevorrichtung 3 auf. Ferner weist der Getränkeautomat 1 in diese Ausführungsform ein massives Gehäuse 18 und eine besonders robuste Auslegung aller Komponenten auf, damit der Getränkeautomat 1 zum Einsatz an öffentlichen Orten mit hohem Durchsatz an Getränken und/oder Zusatzprodukten eingesetzt werden kann. Das Standgerät 1 hat eine Höhe von zumindest 1,5 Meter, vorzugsweise von zumindest 2 Metern, und eine Tiefe von etwa einem halben Meter. Innerhalb des Getränkeautomat 1 steht somit genügend Bauraum für entsprechende Vorratsvorrichtungen 11 zur Bevorratung von Zusatzprodukten 5 und Produkten zur Zubereitung des Getränks zur Verfügung.

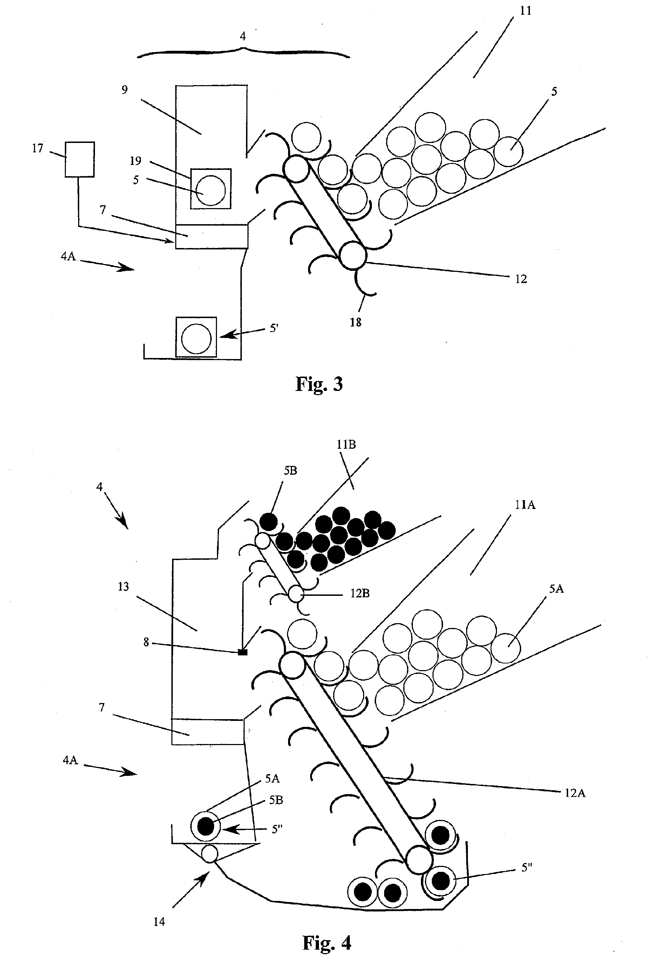

Figur 3 zeigt anhand einer schematischen Darstellung die Funktionsweise eines ersten Ausführungsbeispiels der zweiten Ausgabevorrichtung 4 innerhalb eines erfindungsgemäßen Automaten. Die zweite Ausgabeeinrichtung 4 enthält einen Elevator 12, eine Umverpackungseinrichtung 9 und eine Freigabeeinrichtung 7 auf. Der Elevator 12 weist entsprechende Greifer 18 auf, über die die im Vorratsbehälter 11 vorgesehenen Zusatzprodukte 5 einzeln aus diesem entnommen werden können. Über den Elevator 12 bzw. die entsprechenden Greifer 18 lassen sich die einzeln entnommenen Zusatzprodukte 5 entlang eines Transportbandes zu der Umverpackungseinrichtung 9 transportieren. Der Elevator 12 ist hier als steigend angeordneter Bandförderer mit an die Form der Zusatzprodukte 5 angepassten Förderstufen ausgebildet.

Ein über den Elevator 12 in die Umverpackungseinrichtung 9 transportiertes Zusatzprodukt 5 wird dort mit einer geeigneten Verpackung versehen, die zum Beispiel dem Schutz des Zusatzproduktes 5 dient. Das so bearbeitete Zusatzprodukt 5' weist nun eine dieses Zusatzprodukt 5 umhüllende Verpackung 19 auf. Die von der Steuereinrichtung 17 angesteuerte Freigabeeinrichtung 7 steuert die Ausgabe der so verpackten Zusatzprodukte 5' in den Ausgabebereich 4A.

Figur 4 zeigt anhand eines zweiten Ausführungsbeispiels die Funktionsweise der zweiten Ausgabevorrichtung 4 für einen erfindungsgemäßen Automaten. Im Unterschied zu den vorigen Ausführungsbeispielen sind hier zwei Vorratsbehälter 11A, 11B vorgesehen, in denen unterschiedliche Zusatzprodukte 5A, 5B gelagert sind. Die zweite Ausgabeeinrichtung 4 weist hier zwei Elevatoren 12A, 12B auf, die den jeweiligen Vorratsbehältern 11A bzw. 11B zugeordnet sind. Über den ersten Elevator 12A lassen sich Zusatzprodukte 5A aus dem ersten Vorratsbehälter 11A transportieren. Über einen zweiten Elevator 12B lassen sich zweite Zusatzprodukte 5B aus dem zweiten Vorratsbehälter 11B transportieren.

Die erfindungsgemäße zweite Ausgabevorrichtung 4 weist darüber hinaus eine Verknüpfungseinrichtung 13 auf. Die über den ersten und zweiten Elevator 12A, 12B in die Verknüpfungseinrichtung 13 transportierten ersten und zweiten Zusatzprodukte 5A bzw. 5B werden in dieser Verknüpfungseinrichtung 13 miteinander verknüpft oder verbunden. Durch dieses Verbinden bzw. Verknüpfen der unterschiedlichen Zusatzprodukte 5A, 5B entsteht ein neues verknüpftes Zusatzprodukt 5".

Beispielsweise sei das erste Zusatzprodukt 5A ein Lebensmittel, beispielsweise eine Milchkapsel, Zucker oder Süßstoff. Das zweite Zusatzprodukt 5B kann beispielsweise ein Bedarfsgegenstand, beispielsweise eine Verpackung, eine Serviette, ein Umrührstäbchen, ein Besteck oder dergleichen sein. Innerhalb der Verknüpfungseinrichtung 13 lassen sich diese beiden Zusatzprodukte 5A, 5B zur Erzeugung eines neuen Zusatzproduktes 5" miteinander kombinieren.

Vorzugsweise weist die zweite Ausgabevorrichtung 4 einen Sensor 8 auf, der überprüfen soll, ob ein zugeführtes Lebensmittel 5A bereits mit einem entsprechenden Bedarfsgegenstand 5B verknüpft ist. Im Falle eines derart verknüpften Zusatzproduktes 5" gibt die Steuereinrichtung 17 die Freigabeeinrichtung 7 zur Ausgabe dieses verknüpften Zusatzproduktes 5" frei.

Zudem ist eine als Wippe ausgeführte Rückführeinrichtung 14 vorgesehen. Über die Rückführeinrichtung 14 lassen sich gegebenenfalls aus dem zweiten Ausgabebereich 4A nicht entnommene Zusatzprodukte 5" zurückführen. Diese nicht entnommenen Zusatzprodukte 5" werden über den ersten Elevator 12A in den Ausgabebereich 4A bzw. die Verknüpfungseinrichtung 13 transportiert, um wiederverwendet zu werden. Über den Sensor 8 lässt sich erfassen, ob ein Zusatzprodukt 5 bereits verknüpft ist, beispielsweise wenn es über die Rückführeinrichtung 14 zugeführt wurde.

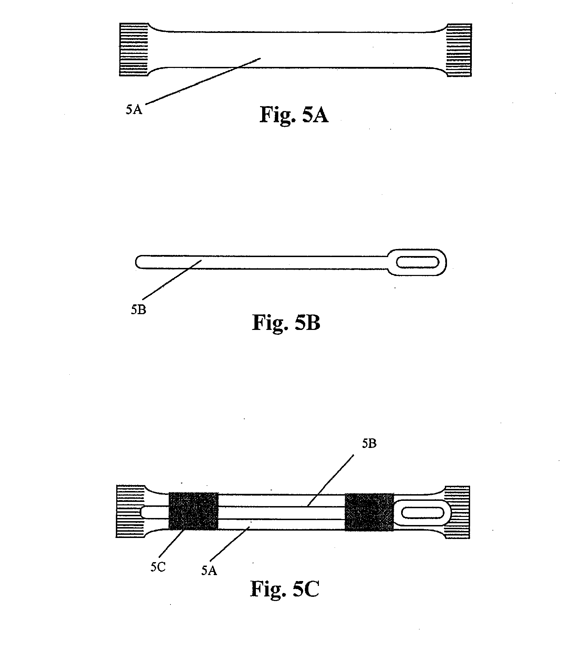

Die Figuren 5A-5C zeigen verschiedene Lebensmittel und Bedarfsgegenstände für die Verwendung in einem erfindungsgemäßen Automaten, insbesondere unter Verwendung einer Vorrichtung entsprechend Figur 4. Figur 5A zeigt ein stäbchenförmiges Zuckertütchen 5A, in welchem Zucker, pulverförmiger Süßstoff oder Milchpulver enthalten sind. Figur 5B zeigt ein Rückstäbchen 5B. Mittels einer erfindungsgemäßen Verknüpfungseinrichtung 13 lassen sich diese beiden Zusatzprodukte 5A, 5B miteinander verknüpfen. Dies ist in Figur 5C dargestellt, in welchem die beiden Zusatzprodukte 5A, 5B mittels einer Verbindung 5C miteinander verbunden sind, beispielsweise mittels einer Klebeverbindung oder ein diese Zusatzprodukte 5A, 5B umhüllendes und fixierendes Band 5c.

Obwohl die vorliegende Erfindung vorstehend anhand bevorzugter Ausführungsbeispiele beschrieben wurde, ist sie darauf nicht beschränkt, sondern ist auf vielfältige Art und Weise modifizierbar.

So kann die Förder- und/oder die Rückführeinrichtung auch einen Aufzug, einen Roboterarm, einen Accelerator oder dergleichen enthalten. Des Weiteren kann die Vorratseinrichtung auch bereits als Vereinzelungseinrichtung ausgeführt sein. Eine Verknüpfung der Zusatzprodukte kann z.B. durch ein beliebiges Fügeverfahren erfolgen. Der Antrieb einer Fördereinrichtung kann elektrisch, hydraulisch, magnetisch oder etwa auch durch manuelle Betätigung, beispielsweise mittels eines Hebels, ausgeführt sein.

Insbesondere können eine Vielzahl von verschiedenen Zusatzprodukten an der zweiten Ausgabevorrichtung oder an zumindest einer weiteren Ausgabevorrichtung ausgegeben werden. Die vorstehend Zusatzprodukte und Lebensmittel seien lediglich als Beispiele zu verstehen und können auch durch weitere Beispiele von Zusatzprodukte und Lebensmittel ergänzt werden.

Auch seien die angegebenen Zahlenangaben lediglich beispielhaft zu verstehen und können natürlich auch bedarfsgemäß anders gewählt sein.

### Bezugszeichenliste

- 1: (Getränke-)Automat
- 2: Aufbereitungsvorrichtung
- 3, 4: Ausgabevorrichtungen
- 3A, 4A: Ausgabebereiche
- 5, 5', 5": Zusatzprodukte
- 5A: Lebensmittel
- 5B: Bedarfsgegenstand
- 5C: Verbindung
- 6: Lebensmittel, Getränk
- 7: Freigabeeinrichtung
- 8: Sensor
- 9: Umverpackungseinrichtung
- 10: Fördereinrichtung
- 11 - 11B: Vorratsvorrichtungen
- 12 - 12B: Elevatoren
- 13: Verknüpfungseinrichtung
- 14: Rückführeinrichtung
- 15: Bedieneinrichtung
- 16: Becher
- 17: Steuereinrichtung
- 18: Greifer des Elevators
- 19: Verpackung

## Patentansprüche

1. Automat (1) zur Ausgabe von Lebensmitteln, insbesondere Verkaufsautomat zur Ausgabe von Heiß- und Kaltgetränken (6),
mit zumindest einem Vorratsbehälter (11; 11A; 11B) zur Aufnahme von losen Zusatzprodukten (5; 5A; 5B),
mit einer Warenausgabevorrichtung (3, 4), die enthält:
- eine erste Ausgabevorrichtung (3) zur bedarfsweisen Ausgabe eines angeforderten Lebensmittels (6) in einem ersten Ausgabebereich (3A),
- eine zweite Ausgabevorrichtung (4) zur bedarfsweisen Ausgabe zumindest eines dem angeforderten Lebensmittel (6) zugeordneten Zusatzproduktes (5; 5A; 5B) in einem zweiten Ausgabebereich (4A), welche eine Fördereinrichtung (10) aufweist, die zwischen dem Vorratsbehälter (11; 11A; 11B) und dem zweiten Ausgabebereich (4A) angeordnet ist und die dazu ausgebildet ist, aus dem Vorratsbehälter (11; 11A; 11B) lose bereitgestellte Zusatzprodukte (5; 5A; 5B) einzeln aufzunehmen und das oder die aufgenommenen Zusatzprodukte (5; 5A; 5B) zum zweiten Ausgabebereich (4A) zu transportieren.

2. Automat gemäß Anspruch 1,
**dadurch gekennzeichnet,**
**dass** die Fördereinrichtung (10) als Elevator (12; 12A; 12B) oder als Förderschnecke ausgebildet ist.

3. Automat nach einem der vorhergehenden Ansprüche,
**dadurch gekennzeichnet,**
**dass** eine Rückführeinrichtung (14) vorgesehen ist, welche dazu ausgebildet ist, ein von einem Benutzer nicht entnommenes Zusatzprodukt (5; 5A; 5B) von dem zweiten Ausgabebereich (4A) der Fördereinrichtung (10) und/oder der Vorratsvorrichtung (11) wieder zurückzuführen.

4. Automat nach einem der vorhergehenden Ansprüche,
**dadurch gekennzeichnet,**
**dass** der Automat (1) als Getränkeautomat (1) ausgebildet ist, welcher eine Aufbereitungsvorrichtung (2) zum Herstellen und/oder zum Aufbereiten von Getränken (6) aufweist.

5. Automat nach Anspruch 4,
**dadurch gekennzeichnet,**
**dass** die Aufbereitungsvorrichtung (2) zur Aufbereitung von Heißgetränken, insbesondere von Tee, Kaffee oder Kaffeeprodukten, ausgebildet ist.

6. Automat nach Anspruch 4 oder 5,
**dadurch gekennzeichnet,**
**dass** der Getränkeautomat (1) als Kaffeestandgerät ausgebildet ist.

7. Automat nach einem der vorhergehenden Ansprüche,
**dadurch gekennzeichnet,**
**dass** die erste und die zweite Ausgabevorrichtung (3, 4) derart ausgebildet sind, dass das Zusatzprodukt (5; 5A; 5B) gleichzeitig mit dem angeforderten Lebensmittel (6) oder unmittelbar nach der Ausgabe des angeforderten Lebensmittels (6) ausgebbar ist.

8. Automat nach einem der vorhergehenden Ansprüche,
**dadurch gekennzeichnet,**
**dass** eine Verknüpfungseinrichtung (13) vorgesehen ist, welche dazu ausgebildet ist, ein Zusatzprodukt (5; 5A; 5B) mit dem angeforderten Lebensmittels (6) zu verbinden, beispielsweise an dem angeforderten und ausgegebenen Lebensmittels (6) anzukleben.

9. Automat nach einem der vorhergehenden Ansprüche,
**dadurch gekennzeichnet,**
**dass** ein Zusatzprodukt (5; 5A; 5B) ein Sachet, ein Portionstütchen, ein Beutel oder ein Röhrchen umfasst, in welchem ein Lebensmittel (5A) und/oder ein Bedarfsgegenstand (5B) vorgesehen ist.

10. Automat nach Anspruch 9,
**dadurch gekennzeichnet,**
**dass** ein Bedarfsgegenstand (5B) Verpackungen, Umrührstäbchen, Besteck, Zahnstocher, Servietten, Spielwaren und/oder Scherzartikel umfasst und/oder
**dass** ein Lebensmittel (5A) Zucker, Süßstoff, Milch, Milchpulver, Zitronensaft, Sirup, Spirituosen, Kakaopulver, Salz, Gewürze, Streusel, Instantprodukte und/oder Aromastoffe umfasst.

11. Automat nach einem der vorhergehenden Ansprüche,
**dadurch gekennzeichnet,**
**dass** eine Steuereinrichtung (16) zur Steuerung der Warenausgabevorrichtung (3, 4) vorgesehen ist, die die Warenausgabevorrichtung (3, 4) derart ansteuert, dass bedarfsgemäß ein dem angeforderten Lebensmittel jeweils zugeordnetes Zusatzprodukt (5; 5A; 5B) und/oder eine dem angeforderten Lebensmittel zugeordnete Anzahl an zusatzprodukten (5; 5A; 5B) ausgebbar ist.
